# EUROPÄISCHE PATENTSCHRIFT

(11) **EP 3 120 127 B1**
(45) Veröffentlichungstag und Bekanntmachung des Hinweises auf die Patenterteilung: **09.05.2018**
(21) Anmeldenummer: 15712820.8
(22) Anmeldetag: 12.03.2015
(51) Int. Cl.: G01N 21/3504, G01N 21/49, G01N 21/64, G01N 21/65, G01M 3/32, G01N 21/03

(54) **DICHTEANSTIEGSMESSUNG IN FOLIENKAMMER**
DENSITY INCREASE MEASUREMENT IN FOIL CHAMBER
MESURE D'AUGMENTATION DE DENSITÉ DANS UN RÉSERVOIR FLEXIBLE

(30) Priorität: 18.03.2014 DE 102014205032
(43) Veröffentlichungstag der Anmeldung: 25.01.2017
(73) Patentinhaber: Inficon GmbH, 50968 Köln (DE)
(72) Erfinder: WETZIG, Daniel, 50999 Köln (DE); SILVIO, Decker, 50999 Köln (DE)
(74) Vertreter: dompatent von Kreisler Selting Werner - Partnerschaft von Patent- und Rechtsanwälten mbB
(86) Internationale Anmeldenummer: PCT/EP2015/055179
(87) Internationale Veröffentlichungsnummer: WO 2015/140041

(56) Entgegenhaltungen:
- EP-A1- 0 741 288
- WO-A1-02/14824
- DE-A1-102012 200 063
- JP-A- H07 129 870
- KR-B1- 100 781 968

## Beschreibung

Die Erfindung betrifft ein Verfahren zur Dichtheitsprüfung von Prüflingen in Prüfkammern mit zumindest einem flexiblen Wandbereich.

Derartige Prüfkammern werden nach Einbringen des Prüflings in die Prüfkammer evakuiert, wodurch sich der flexible Wandbereich an den Prüfling anschmiegt, um das verbleibende Restvolumen innerhalb der Prüfkammer im Bereich außerhalb des Prüflings zu reduzieren. Die Wände der Prüfkammer können beispielsweise vollständig aus einer flexiblen Folie bestehen. Derartige Prüfkammern sind Folienkammern.

Bei dem Prüfling kann es sich um einen Verpackungsbeutel, zum Beispiel eine Lebensmittelverpackung, handeln. Der Prüfling wird in die Prüfkammer gelegt und die Prüfkammer anschließend gasdicht verschlossen und evakuiert. Mit dem Begriff "Evakuieren" ist vorliegend kein absolutes Vakuum gemeint, sondern vielmehr ein Absenken des Drucks auf einen solchen Druck, der geringer ist, als der Atmosphärendruck in der die Prüfkammer umgebenden Atmosphäre.

Aus DE 10 2005 027 023 ist es bekannt, nach Evakuieren der Prüfkammer den Druck innerhalb der Prüfkammer im Bereich außerhalb des Prüflings zu messen. Dem liegt der Gedanke zugrunde, dass aus dem Prüfling austretendes Gas einen Druckanstieg in der Prüfkammer im Bereich außerhalb des Prüflings bewirkt. Hierzu muss das Restvolumen der Prüfkammer möglichst gering sein, was durch sich an den Prüfling anschmiegende Folien bewirkt wird.

Der Totaldruckanstieg innerhalb der Prüfkammer ist temperaturabhängig. Zum einen kann eine Temperaturänderung dadurch hervorgerufen werden, dass das Verpackungsgut gegenüber der Temperatur in der Prüfkammer erwärmt ist, so dass austretendes Leckgas zu einer Temperaturerhöhung führt. Zum anderen bewirkt die Druckabsenkung in der Prüfkammer eine Abkühlung des Gases innerhalb der Prüfkammer. Jede Temperaturänderung des Gases innerhalb der Prüfkammer beeinflusst den Prüfkammerdruck. Dabei ist es nicht ohne Weiteres möglich, die temperaturbedingte Druckänderung von der Druckänderung durch austretendes Leckagegas zu unterscheiden.

WO 02/14824 A1 beschreibt ein Verfahren nach dem Oberbegriff von Anspruch 1, bei welchem ein Gasgenerator in einer evakuierten Prüfkammer angeordnet und mit Helium beaufschlagt wird, wobei das in die Prüfkammer austretende Helium als Hinweis auf ein Leck erkannt wird.

JP H07-129870 A beschreibt eine Gasleckerkennung bei einer Gasisolierungsöffnungs- und Schließvorrichtung anhand einer Gasdichtemessung.

KR 100781968 B1 beschreibt einen Gasdichtesensor, der die Gasdichte basierend auf der Messung der Infrarotabsorption ermittelt.

Der Erfindung liegt die Aufgabe zugrunde, ein verbessertes Verfahren zur Dichtheitsprüfung an Prüflingen in flexiblen Prüfkammern zu schaffen.

Das erfindungsgemäße Verfahren ist definiert durch die Merkmale von Patentanspruch 1. Demnach wird zur Dichtheitsprüfung nach Einbringen des Prüflings in die Prüfkammer und nach Evakuieren der Prüfkammer die Dichte des Gases innerhalb der Prüfkammer im Bereich außerhalb des Prüflings gemessen. Dies kann insbesondere durch Messen des zeitlichen Verlaufs der Gasdichte erfolgen. Diese Gasdichte nimmt zu, wenn Gas aufgrund einer Leckage aus dem Prüfling austritt und in das Prüfkammervolumen gelangt. Die Dichte eines Gases ist in einem geschlossenen Volumen unabhängig von der Temperatur, sodass das erfindungsgemäße Dichtheitsprüfverfahren temperaturunabhängig erfolgen kann.

Das Ergebnis der erfindungsgemäßen Dichtheitsprüfung wird also nicht durch Temperaturschwankungen beeinflusst und verfälscht. Bei der Temperaturzunahme eines Gases erhöht sich die Energie des Gases und damit die Geschwindigkeit der Moleküle und Atome. Während die höhere Geschwindigkeit zu einer Erhöhung des Druckes führt, ist die Gasdichte, das heißt die Masse oder die Teilchenzahl pro Volumeneinheit, temperaturunabhängig und bei Erhöhung der Temperatur konstant.

Die Gasdichtemessung erfolgt mit physikalischen Messverfahren, welche nicht die "Kraft pro Flächeneinheit" (Gasdruck), sondern eine kollektive Teilcheneigenschaft messen, welche nur zu der Anzahl der Teilchen im Volumen (Gasdichte) proportional ist, aber nichts mit der temperaturabhängigen mittleren thermischen Geschwindigkeit der Teilchen zu tun hat. Das kann zum Beispiel durch Messung der elektrischen Ladung, der Infrarotabsorption, der Rayleigh-Streuung, der Raman-Streuung, der Fluoreszenz der Gasatome/-moleküle oder der Gaswärmeleitung erfolgen. Die Gasdichtemessung kann auch mit einem gasspezifischen Sensor (zum Beispiel Sauerstoffsensor/"Lambdasonde") oder einem Sensor der Wise-Technologie, wie er zum Beispiel von der Firma INFICON angeboten wird, erfolgen.

Im Folgenden werden anhand der Figuren Ausführungsbeispiele der Erfindung näher erläutert. Es zeigen:
- Figur 1: ein erstes Ausführungsbeispiel,
- Figur 2: ein zweites Ausführungsbeispiel und
- Figur 3: ein drittes Ausführungsbeispiel.

Bei allen Ausführungsbeispielen ist die Prüfkammer 10 eine Folienkammer mit einer oberen Folienlage 12 und einer unteren Folienlage 14. Die beiden Folienlagen 12, 14 werden um den Prüfling 16 herum und in dem Bereich außerhalb des Prüflings 16 gegeneinander gelegt. Dabei ist zwischen den Folienlagen 12, 14 in deren Randbereich außerhalb des Prüflings ein Dichtungsring 18 eingebracht, um die Prüfkammer 10 gasdicht zu verschließen. Der Dichtungsring 18 dient nur zur Veranschaulichung des Prinzips, die Folienlagen 12,14 in deren Randbereich gasdicht abzudichten. Anstelle des Dichtungsrings kann auch eine Doppeldichtung zum Einsatz kommen.

Das Prüfkammervolumen 20 innerhalb der Prüfkammer 10 im Bereich außerhalb des Prüflings 16 wird durch Evakuieren der Prüfkammer 10 reduziert, bis sich die Folienlagen 12, 14 vollständig an den Prüfling 16 anschmiegen. Das Evakuieren, das heißt das Absenken des Druckes innerhalb der Prüfkammer 10, erfolgt mit einer Vakuumpumpe 22, die über eine Ventilanordnung 24 mit dem Prüfkammervolumen 20 verbunden ist.

In jedem der Ausführungsbeispiele erfolgt die Messung der Dichte des Gases in dem Prüfkammervolumen 20 mit Hilfe einer Infrarotabsorptionsmesszelle 26, wobei auch andere Dichtemessverfahren denkbar sind.

Bei dem ersten Ausführungsbeispiel sind die Vakuumpumpe 22 und die Messzelle 26 über ein Dreiwegeventil mit dem Prüfkammervolumen 20 verbunden. Dadurch können der Gasleitungsweg zur Vakuumpumpe 22, zur Messzelle 26 und zum Prüfkammervolumen 20 jeweils separat und unabhängig voneinander geöffnet oder gesperrt werden.

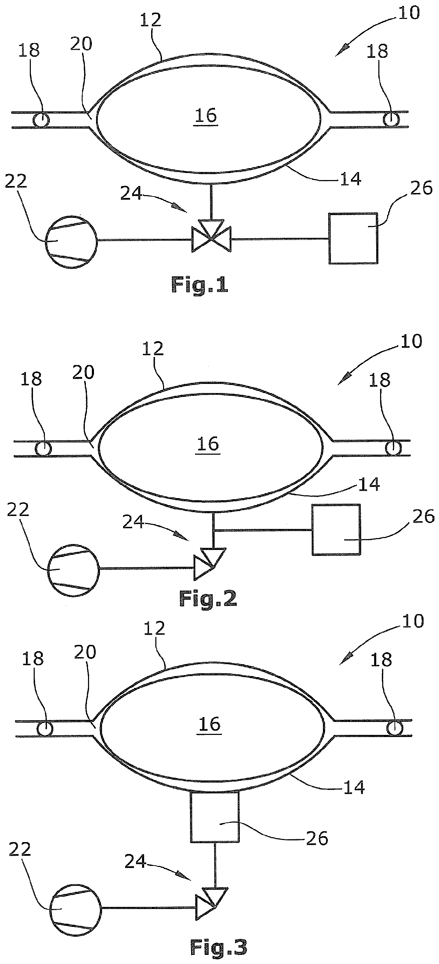

Bei dem Ausführungsbeispiel nach Figur 2 ist die Vakuumpumpe 22 über ein Zweiwegeventil 24 mit dem Prüfkammervolumen 20 verbunden, wobei die Messzelle 26 mit dem Gasleitungsweg zwischen der Prüfkammer 10 und der Ventilanordnung 24 gasleitend verbunden ist.

Das dritte Ausführungsbeispiel unterscheidet sich von dem zweiten Ausführungsbeispiel dadurch, dass die Messzelle 26 in dem Gasleitungsweg von der Prüfkammer 10 zu der Ventilanordnung 24 enthalten ist.

Der Prüfling 16, bei dem es sich um eine flexible Lebensmittelverpackung handeln kann, wird zuerst zwischen die beiden Folienlagen 12, 14 gebracht und die Folienlagen anschließend dichtend verschlossen. Mit Hilfe der Vakuumpumpe 22 wird als nächstes die Prüfkammer 10 evakuiert, sodass das Prüfkammervolumen 20 im Bereich außerhalb des Prüflings 16 minimal ist. Anschließend wird die Vakuumpumpe 22 mit Hilfe der Ventilanordnung 24 von der Prüfkammer 10 getrennt. Aus dem Prüfling 16 austretendes Gas, welches in die Prüfkammer 10 einströmt, wird der Infrarotabsorptionsmesszelle 26 zugeführt. In der Messzelle 26 wird die Dichte des Gases bestimmt. Die Gasdichte wird dabei während eines vorgegebenen Zeitraumes überwacht, wobei ein Anstieg der Gasdichte als Hinweis auf ein Leck des Prüflings 16 dient. Der Anstieg der Gasdichte über der Zeit wird zur Bestimmung der Größe des Lecks verwendet.

## Patentansprüche

1. Verfahren zur Dichtheitsprüfung eines Prüflings (16) in einer Prüfkammer (10), deren Wand zumindest zu einem Teil aus einem flexiblen Material besteht, wobei der Prüfling in die Prüfkammer eingebracht wird und die Prüfkammer anschließend evakuiert wird
**dadurch gekennzeichnet,**
**dass** die Dichtheitsprüfung durch Messen der Gasdichte innerhalb der Prüfkammer (10) im Bereich außerhalb des Prüflings (16) erfolgt.

2. Verfahren zur Dichtheitsprüfung nach Anspruch 1, **dadurch gekennzeichnet, dass** die Messung der Gasdichte durch Messung der Infrarotabsorption, der Rayleigh-Streuung, der Raman-Streuung der Fluoreszenz, oder der GasWärmeleitung erfolgt.

3. Verfahren zur Dichtheitsprüfung nach Anspruch 1 oder 2, **dadurch gekennzeichnet, dass** zur Dichtheitsprüfung keine Messung des Gasdrucks in der Prüfkammer (10) im Bereich außerhalb des Prüflings (16) erfolgt.

4. Verfahren zur Dichtheitsprüfung nach einem der vorhergehenden Ansprüche, **dadurch gekennzeichnet, dass** das Gas aus der Prüfkammer (10) einer Messzelle (26) zugeführt wird, in der die Dichtemessung erfolgt.

5. Verfahren zur Dichtheitsprüfung nach einem der vorhergehenden Ansprüche, **dadurch gekennzeichnet, dass** die Prüfkammer eine Folienkammer ist, deren Wände aus flexiblen Folien (12, 14) bestehen.

6. Verfahren zur Dichtheitsprüfung nach einem der vorhergehenden Ansprüche, **dadurch gekennzeichnet, dass** die Dichtheitsprüfung durch Messen des zeitlichen Verlaufs der Gasdichte erfolgt.

## Claims

1. A method for a tightness test of a test piece (16) in a test chamber (10) whose wall is at least partly made of a flexible material, wherein said test piece is introduced into said test chamber and said test chamber is then evacuated,
**characterized in that**
the tightness test is performed by measuring the gas density inside said test chamber (10) in the area outside said test piece (16).

2. The method for a tightness test according to claim 1, **characterized in that** the measurement of the gas density is performed by measurement of the infrared absorption, the Rayleigh scattering, the Raman scattering, the fluorescence or the gas heat conduction.

3. The method for a tightness test according to claim 1 or 2, **characterized in that** for the tightness test no measurement of the gas pressure in the test chamber (10) in the area outside the test piece (16) is performed.

4. The method for a tightness test according to any one of the preceding claims, **characterized in that** the gas from the test chamber (10) is fed to a measuring cell (26) in which the tightness measurement is performed.

5. The method for a tightness test according to any one of the preceding claims, **characterized in that** the test chamber is a film chamber whose walls are made of flexible films (12, 14).

6. The method for a tightness test according to any one of the preceding claims, **characterized in that** the tightness test is performed by measuring the time profile of the gas density.

## Revendications

1. Procédé destiné à contrôler l'étanchéité d'une éprouvette (16) dans une chambre de contrôle (10) dont la paroi se compose au moins en partie d'un matériau flexible, l'éprouvette étant mise en place dans la chambre de contrôle et le vide étant ensuite réalisé dans la chambre de contrôle,
**caractérisé en ce que**
le contrôle d'étanchéité s'effectue par la mesure de la densité du gaz à l'intérieur de la chambre de contrôle (10) dans la zone situé à l'extérieur de l'éprouvette (16) .

2. Procédé destiné à contrôler l'étanchéité selon la revendication 1, **caractérisé en ce que** la mesure de la densité du gaz s'effectue par la mesure de l'absorption infrarouge, de la diffusion de Rayleigh, de la diffusion Raman de la fluorescence, ou de la conduction thermique du gaz.

3. Procédé destiné à contrôler l'étanchéité selon la revendication 1 ou 2, **caractérisé en ce que**, pour le contrôle d'étanchéité, aucune mesure de la pression du gaz n'est effectuée dans la chambre de contrôle (10) dans la zone à l'extérieur de l'éprouvette (16).

4. Procédé destiné à contrôler l'étanchéité selon l'une des revendications précédentes, **caractérisé en ce que** le gaz en provenance de la chambre de contrôle (10) est conduit à une cellule de mesure (26) dans laquelle s'effectue la mesure de la densité.

5. Procédé destiné à contrôler l'étanchéité selon l'une des revendications précédentes, **caractérisé en ce que** la chambre de contrôle est une chambre en feuille dont les parois se composent de feuilles flexibles (12, 14).

6. Procédé destiné à contrôler l'étanchéité selon l'une des revendications précédentes, **caractérisé en ce que** le contrôle d'étanchéité s'effectue par la mesure de l'allure dans le temps de la densité du gaz.
